# EUROPÄISCHE PATENTSCHRIFT

(11) **EP 2 570 020 B1**
(45) Veröffentlichungstag und Bekanntmachung des Hinweises auf die Patenterteilung: **22.10.2014**
(21) Anmeldenummer: 12180450.4
(22) Anmeldetag: 14.08.2012
(51) Int. Cl.: A01D 43/08, A01D 41/127, G01F 1/80

(54) **Feldhäcksler mit einer Anordnung zur Messung des Erntegutdurchsatzes**
Forage harvester with means for measuring the crop flow
Ramasseuse-hacheuse avec un agencement destiné à mesurer le rendement de produits agricoles

(30) Priorität: 15.09.2011 DE 102011082727
(43) Veröffentlichungstag der Anmeldung: 20.03.2013
(73) Patentinhaber: DEERE & COMPANY, Moline, Illinois 61265-8098 (US)
(72) Erfinder: Merx, Stephan, 55288 Partenheim (DE); Flohr, Werner, 67661 Kaiserslautern (DE)
(74) Vertreter: Holst, Sönke

(56) Entgegenhaltungen:
- EP-A1- 0 463 240
- DE-A1- 19 603 928
- DE-U1- 9 002 780

## Beschreibung

Die Erfindung betrifft einen Feldhäcksler mit einem Verbrennungsmotor, der über einen ersten Treibriemen mit einer Häckseltrommel und einem ersten Ende einer Antriebswelle eines bezüglich einer Erntegutflussrichtung stromab der Häckseltrommel angeordneten Auswurfbeschleunigers antriebsverbunden ist, wobei ein zweites Ende der Antriebswelle des Auswurfbeschleunigers über einen zweiten Treibriemen mit einem Körnerprozessor zum Anschlagen von im Erntegutstrom enthaltenen Körnern in Antriebsverbindung steht oder bringbar ist, der in Erntegutflussrichtung zwischen der Häckseltrommel und dem Auswurfbeschleuniger angeordnet oder positionierbar ist und wobei der Auswurfbeschleuniger mit der Antriebswelle antriebsverbundene, sich radial erstreckende Stützscheiben und an den Stützscheiben befestigte Paddel zur Erntegutförderung umfasst.

### Stand der Technik

Bei Feldhäckslern besteht ein Interesse, den jeweiligen Erntegutdurchsatz zu erfassen, sei es zu Zwecken der Präzisionslandwirtschaft, zur automatischen Dosierung einer Siliermittelzugabe oder zur Abrechnung bei Lohnunternehmern. Hierfür wurden verschiedene Sensoren vorgeschlagen, die den Erntegutdurchsatz beispielsweise anhand des Abstands zwischen unteren und oberen Vorpresswalzen oder der Intensität den Erntegutstrom durchdringender radioaktiver Strahlung oder der Leistungsaufnahme einer Häckseltrommel oder eines stromab der Häckseltrommel angeordneten Auswurfbeschleunigers erfassen (Auernhammer et al., Yield Measurement on Self Propelled Forage Harvesters, ASAE Paper No. 951757). In der Praxis hat sich die Durchsatzmessung mit radioaktiven Strahlen nicht als akzeptabel herausgestellt und die Messung des Abstands zwischen den Vorpresswalzen ist einerseits besonders bei in Querrichtung inhomogen gefülltem Einzugskanal relativ ungenau und erfordert andererseits auch eine Kenntnis der Dichte des Ernteguts, um den als besonders relevant angesehenen Massendurchsatz zu evaluieren. Diese Nachteile liegen bei einer Erfassung des Antriebsmoments des Auswurfbeschleunigers nicht vor.

Bei Feldhäckslern wird allerdings üblicherweise ein in Erntegutflussrichtung zwischen der Häckseltrommel und einem Auswurfbeschleuniger angeordneter Körnerprozessor, der bei der Maisernte dazu dient, im Erntegutstrom enthaltene Körner anzuschlagen, durch die Antriebswelle des Auswurfbeschleunigers angetrieben. Dazu wird die Antriebswelle des Auswurfbeschleunigers auf einer Seite des Auswurfbeschleunigers durch eine Riemenscheibe angetrieben, an welcher ein vom Verbrennungsmotor des Feldhäckslers angetriebener Treibriemen anliegt, während auf der anderen Seite des Auswurfbeschleunigers eine an der Antriebswelle befestigte Riemenscheibe über einen weiteren Treibriemen den Körnerprozessor antreibt (vgl. DE 196 03 928 A1). Eine direkte Erfassung des Antriebsmoments an der Antriebswelle ist daher nicht möglich.

In der EP 0 463 240 A1 wird ein Überkehrförderer in einem Mähdrescher beschrieben, der durch Federn an einer Welle angelenkte Paddel umfasst. Anhand des Winkels der Paddel gegenüber der Welle wird mittels eines optischen Sensors, der zusätzlich mit einem starr an der Welle angebrachten Referenzelement zusammenwirkt, der Materialdurchsatz erfasst.

### Aufgabe der Erfindung

Die der Erfindung zu Grunde liegende Aufgabe wird darin gesehen, einen Feldhäcksler mit einer gegenüber dem Stand der Technik verbesserten, auf einer Erfassung des Antriebsmoments eines Auswurfbeschleunigers beruhenden Anordnung zur Messung des Erntegutdurchsatzes bereitzustellen.

### Lösung der Aufgabe

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Feldhäcksler umfasst einen Verbrennungsmotor, bei dem es sich in der Regel um einen Dieselmotor handelt. Der Verbrennungsmotor steht über einen ersten Treibriemen mit einer Häckseltrommel und einem ersten Ende einer Antriebswelle zum Antrieb eines bezüglich einer Erntegutflussrichtung stromab der Häckseltrommel angeordneten Auswurfbeschleunigers in Antriebsverbindung. Ein zweites Ende der Antriebswelle steht über einen zweiten Treibriemen mit einem Körnerprozessor zum Anschlagen von im Erntegutstrom enthaltenen Körnern in Antriebsverbindung oder kann mit dem Körnerprozessor in Antriebsverbindung gebracht werden. Der Körnerprozessor ist in Erntegutflussrichtung zwischen der Häckseltrommel und dem Auswurfbeschleuniger angeordnet oder positionierbar. Der Auswurfbeschleuniger setzt sich aus sich radial erstreckenden Stützscheiben und an den Stützscheiben befestigten Paddeln zur Erntegutförderung zusammen. Die Stützscheiben sind an einer die Antriebswelle umschließenden Hohlwelle befestigt. Zwischen dem Auswurfbeschleuniger und der Antriebswelle ist ein Sensor zur Erfassung der von der Antriebswelle auf die Hohlwelle übertragenen Kraft angeordnet.

Auf diese Weise kann die Antriebswelle des Auswurfbeschleunigers weiterhin zum Durchleiten der Antriebsleistung des Verbrennungsmotors zum Körnerprozessor verwendet, aber dennoch die Antriebsleistung des Auswurfbeschleunigers erfasst werden.

Bei einer bevorzugten Ausführungsform der Erfindung ist der Auswurfbeschleuniger an einem Ende mit einem Flansch verbunden, der nach radial innen ragende, erste Vorsprünge aufweist, während die Antriebswelle mit einem Drehkörper verbunden ist, der radial nach außen ragende, zweite Vorsprünge aufweist und der Sensor zwischen den ersten Vorsprüngen und den zweiten Vorsprüngen angeordnet ist. Der Drehkörper kann insbesondere innerhalb eines hohlen Innenraums des Flansches angeordnet sein.

Es bietet sich an, den Sensor an einem ersten Ende des Nachbeschleunigers anzubringen und den Nachbeschleuniger an seinem zweiten Ende gegenüber der Antriebswelle in einer Drehlagerung abzustützen.

### Ausführungsbeispiel

Anhand der Abbildungen wird ein Ausführungsbeispiel der Erfindung erläutert. Es zeigen:
- Fig. 1: eine schematische seitliche Ansicht eines Feldhäckslers,
- Fig. 2: eine schematische Draufsicht auf die Antriebsanordnung des Feldhäckslers,
- Fig. 3: eine perspektivische Ansicht des Auswurfbeschleunigers und der Antriebswelle, und
- Fig. 4: eine perspektivische Ansicht eines Flansches mit einem zentrischen Drehkörper und einem Sensor.

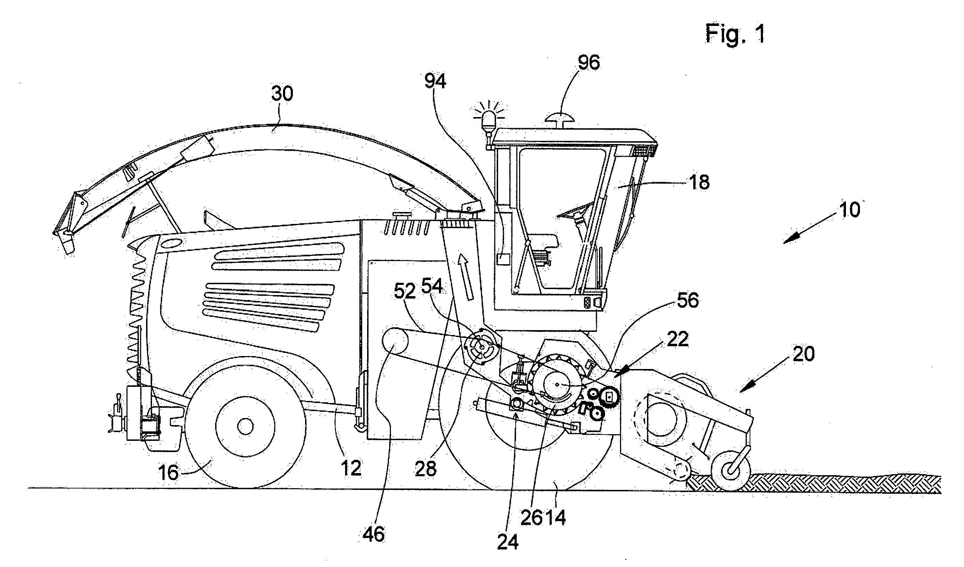

In der Figur 1 ist ein selbstfahrender Feldhäcksler 10 in schematischer Seitenansicht dargestellt. Der Feldhäcksler 10 baut sich auf einem Rahmen 12 auf, der von vorderen angetriebenen Rädern 14 und lenkbaren rückwärtigen Rädern 16 getragen wird. Die Bedienung der Arbeitsmaschine 10 erfolgt von einer Fahrerkabine 18 aus, von der aus ein Erntevorsatz 20 in Form eines Aufnehmers einsehbar ist. Mittels des Erntevorsatzes 20 vom Boden aufgenommenes Erntegut, z. B. Gras oder dergleichen wird über einen Einzugsförderer 22 mit Vorpresswalzen, die innerhalb eines Einzugsgehäuses an der Frontseite der Arbeitsmaschine 10 angeordnet sind, einer unterhalb der Fahrerkabine 18 angeordneten Häckseltrommel 26 zugeführt, die es in kleine Stücke häckselt und es einem Auswurfbeschleuniger 28 aufgibt. Das Gut verlässt die Arbeitsmaschine 10 zu einem nebenher fahrenden Transportfahrzeug über einen um eine etwa vertikale Achse drehbaren und in der Neigung verstellbaren Auswurfkrümmer 30. Zwischen der Häckseltrommel 26 und dem Auswurfbeschleuniger 28 ist ein Körnerprozessor 24 mit zwei Walzen angeordnet, der bei der Maisernte zum Anschlagen von Körnern im Erntegut dient. Die Walzen des Körnerprozessors 24 können bei der Grasernte, wie dargestellt, in eine hinreichend voneinander beabstandete Stellung gebracht werden, oder sie werden aus dem Erntegutfluss entfernt bzw. ganz aus dem Feldhäcksler ausgebaut. Im Folgenden beziehen sich Richtungsangaben, wie seitlich, unten und oben, auf die Vorwärtsbewegungsrichtung V der Arbeitsmaschine 10, die in der Figur 1 nach rechts verläuft.

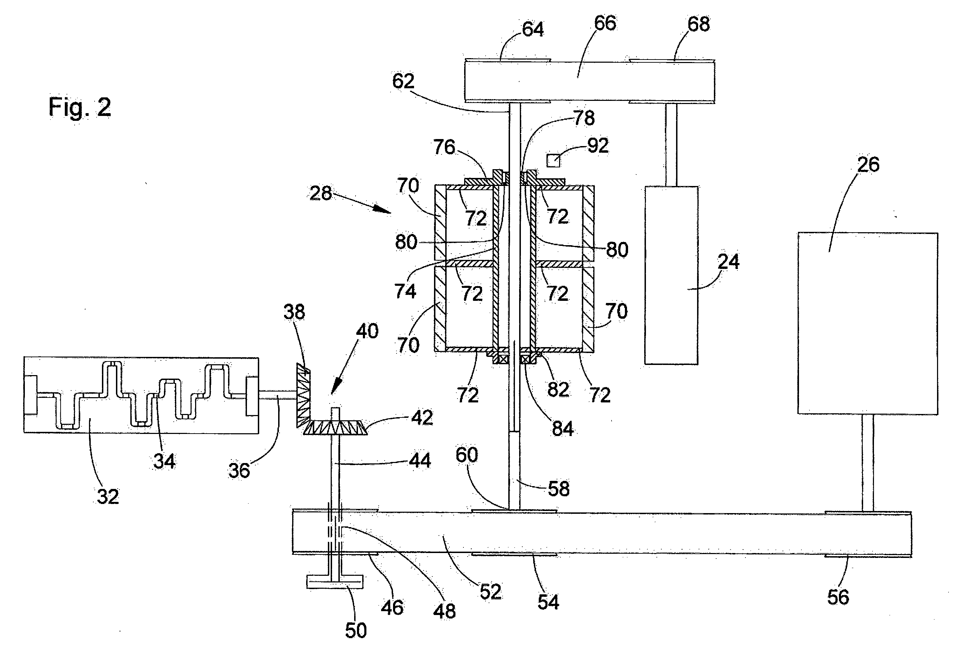

Die Figur 2 zeigt eine Draufsicht auf die Antriebsanordnung des Feldhäckslers 10. Im rückwärtigen Bereich befindet sich ein in Fahrtrichtung V angeordneter Verbrennungsmotor 32. Der Verbrennungsmotor 32 treibt im Betrieb mit seiner Kurbelwelle 34 eine Längswelle 36 an, die mit einem ersten Kegelzahnrad 38 eines Winkelgetriebes 40 verbunden ist. Ein zweites Kegelzahnrad 42 des Winkelgetriebes 40 ist mit einer Querwelle 44 verbunden, die sich durch eine mit einer Riemenscheibe 46 verbundene hohle Welle 48 hindurch auf die vom Winkelgetriebe 40 abgewandte Seite der Riemenscheibe 46 erstreckt und dort mit einer Kupplung 50 verbunden ist. Die Riemenscheibe 46 wird von einem ersten Treibriemen 52 umschlungen, der auch eine Riemenscheibe 54 für den Antrieb des Auswurfbeschleunigers 28 und eine Riemenscheibe 56 zum Antrieb der Häckseltrommel 26 umschlingt. Die Kupplung 50 ist ausgangsseitig mit der hohlen Welle 48 verbunden und ermöglicht es, den Treibriemen 52 und mit ihm die Häckseltrommel 26 und den Auswurfbeschleuniger 28 ein- und auszuschalten.

Die Riemenscheibe 54 ist mit einem ersten Ende 60 einer Antriebswelle 58 zum Antrieb des Auswurfbeschleunigers 28 verbunden. Das zweite Ende 62 der Antriebswelle 58 ist mit einer Riemenscheibe 64 verbunden, die bei der Maisernte über einen zweiten Treibriemen 66 zwei Riemenscheiben 68 (von denen in der Figur 2 nur eine dargestellt ist, s. aber DE 196 03 928 A1) antreibt, die ihrerseits nur bei der Maisernte die Walzen des Körnerprozessors 24 antreiben.

Der Auswurfbeschleuniger 28 umfasst eine Anzahl an sich quer zur Erntegutflussrichtung erstreckenden Paddeln 70, die durch sich radial zur Antriebswelle 58 erstreckende Stützscheiben 72, von denen drei über die Breite des Auswurfbeschleunigers 28 verteilt sind, mit einer Hohlwelle 74 starr verbunden sind. Die Paddel 70 erstrecken sich jeweils zwischen zwei Stützscheiben 72 und sind an ihnen befestigt. Die Hohlwelle 74 umschließt die Antriebswelle 58 konzentrisch. Der Auswurfbeschleuniger 28 ist an seinem ersten (in der Ausführungsform nach Figur 2 rechten, oben eingezeichneten) Ende mit einem Flansch 76 verbunden. Der Flansch 76 ist in der dargestellten Ausführungsform mit der ihm benachbarten Stützscheibe 72 verschraubt; er könnte aber auch direkt mit der Hohlwelle 74 verschweißt oder auf andere Weise mit ihr verbunden sein. Der Flansch 76 umfasst einen mittigen Hohlraum, in dem ein mit der Antriebswelle 58 starr verbundener Drehkörper 78 angeordnet ist. Zwischen dem Drehkörper 78 und dem Flansch 76 ist wenigstens ein Sensor 80 zur Erfassung der von der Antriebswelle 58 auf die beweglichen Elemente (d.h. Hohlwelle 74, Stützscheiben 72 und Paddel 70) des Auswurfbeschleunigers 28 übertragenen Antriebskraft angebracht. Das zweite, in der Figur 2 unten eingezeichnete Ende des Auswurfbeschleunigers 28 ist über einen Lagerflansch 82 und eine Drehlagerung 84 auf der Antriebswelle 58 abgestützt. Der Lagerflansch 82 ist in der dargestellten Ausführungsform mit der ihm benachbarten Stützscheibe 72 verschraubt; er könnte aber auch direkt mit der Hohlwelle 74 verschweißt oder auf andere Weise mit ihr verbunden sein.

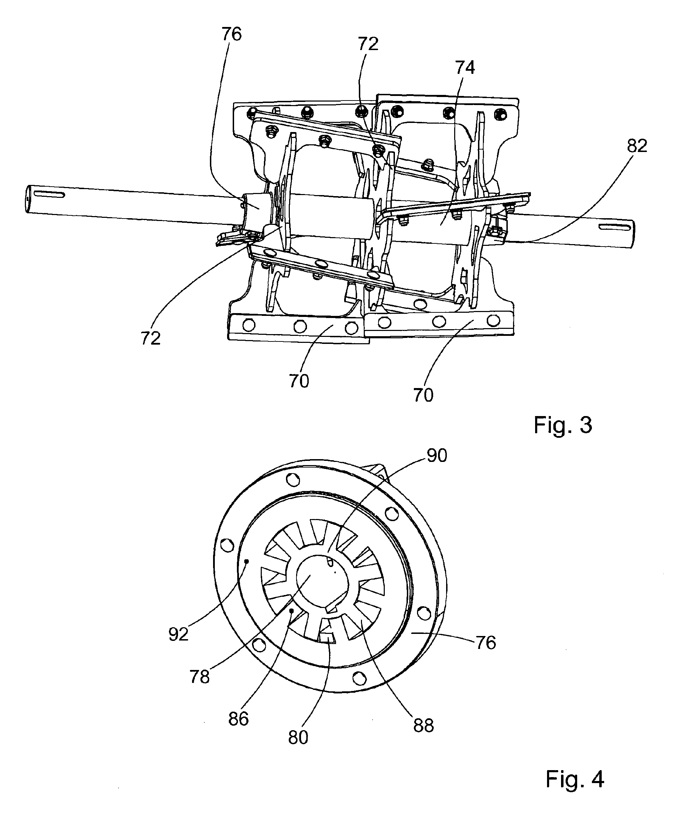

Die Anordnung des Auswurfbeschleunigers 28 ist in der Figur 3 perspektivisch dargestellt, während die Figur 4 den Flansch 76, den Drehkörper 78 und einen Sensor 80 zeigt. Der Flansch 76 ist mit einem ringförmigen Abschnitt 92 ausgestattet, der sich in axialer Richtung vom eigentlichen Flansch 76 nach außen erstreckt und radial nach innen ragende Vorsprünge 86 umfasst, die sich bis in unmittelbare Nachbarschaft eines zylindrischen, zentrischen Bereichs 90 des Drehkörpers 78 erstrecken, der durch eine Nut-Keil-Verbindung mit der Antriebswelle 58 starr verbunden ist. Analog weist der Drehkörper 78 radial nach außen ragende Vorsprünge 88 auf, die sich bis in die unmittelbare Nachbarschaft des ringförmigen Abschnitts 92 erstrecken. Zwischen den benachbarten, in axialer Richtung untereinander ausgerichteten Vorsprüngen 86, 88 ist der Sensor 80 angeordnet, bei dem es sich um einen beliebigen Druck- oder Kraftaufnehmer handeln kann. Da flansch- und drehkörperseitig jeweils drei Vorsprünge 86, 88 vorhanden sind, könnten insgesamt drei Sensoren 80 für die Erfassung der von der Antriebswelle 58 auf den Auswurfbeschleuniger 28 übertragenen Kraft um den Umfang der Antriebswelle 58 verteilt werden.

Da sich der Sensor 80 im Betrieb dreht, kann sein Ausgangssignal über Schleifringe auf der Antriebswelle 58 oder in an sich bekannter Weise durch elektromagnetische Wellen (s. DE 199 50 652 A1) auf einen der Antriebswelle 58 benachbarten Aufnehmer 92 übertragen werden, der mit einer Steuereinrichtung 94 (vgl. Figur 1) in Verbindung steht. Die Steuereinrichtung 94 kann die Signale des Sensors 80 unter Verwendung von geeigneten Kalibrierdaten in Massendurchsatzwerte (beispielsweise in Einheiten von kg/s) umrechnen und dem Bediener in der Kabine 18 anzeigen und/oder unter Verwendung von Positionssignalen eines satellitenbasierten Positionsbestimmungssystems 96 georeferenziert aufzeichnen, um sie später zu Abrechnungszwecken bei Lohnarbeiten und/oder zu Zwecken der Präzisionslandwirtschaft verwenden zu können. Alternativ oder zusätzlich werden sie zur automatischen Dosierung einer Siliermittelzugabe (nicht gezeigt) oder zur selbsttätigen Vorgabe der Vortriebsgeschwindigkeit bzw. Verbrennungsmotordrehzahl des Feldhäckslers 10 verwendet.

Schließlich sei noch angemerkt, dass es möglich wäre, die Reibungskraft am Boden des Gehäuses des Auswurfbeschleunigers 28 zu erfassen, d. h. die durch das Erntegut auf den Boden des Gehäuses des Auswurfbeschleunigers 28 ausgeübten Kräfte in radialer und/oder Umfangsrichtung des Auswurfbeschleunigers 28 mittels beliebiger Sensoren wie Dehnungsmessstreifen oder optischer Sensoren (vgl. DE 10 2004 052 446 A1) zu messen und mit den Messwerten des Sensors zu kombinieren, um die Genauigkeit zu vergrößern.

## Patentansprüche

1. Feldhäcksler (10) mit einem Verbrennungsmotor (32), der über einen ersten Treibriemen (52) mit einer Häckseltrommel (26) und einem ersten Ende (60) einer Antriebswelle (58) zum Antrieb eines bezüglich einer Erntegutflussrichtung stromab der Häckseltrommel (26) angeordneten Auswurfbeschleunigers (28) antriebsverbunden ist, wobei ein zweites Ende (62) der Antriebswelle (58) über einen zweiten Treibriemen (66) mit einem Körnerprozessor (24) zum Anschlagen von im Erntegutstrom enthaltenen Körnern in Antriebsverbindung steht oder bringbar ist, der in Erntegutflussrichtung zwischen der Häckseltrommel (26) und dem Auswurfbeschleuniger (28) angeordnet oder positionierbar ist und wobei der Auswurfbeschleuniger (28) mit der Antriebswelle (58) antriebsverbundene, sich radial erstreckende Stützscheiben (72) und an den Stützscheiben (72) befestigte Paddel (70) zur Erntegutförderung umfasst, **dadurch gekennzeichnet, dass** die Stützscheiben (72) an einer die Antriebswelle (58) umschließenden Hohlwelle (74) befestigt sind und dass zwischen der Antriebswelle (58) und dem Auswurfbeschleuniger (28) ein Sensor (80) zur Erfassung der von der Antriebswelle (58) auf den Auswurfbeschleuniger (28) übertragenen Kraft angeordnet ist.

2. Feldhäcksler (10) nach Anspruch 1, **dadurch gekennzeichnet, dass** der Auswurfbeschleuniger (28) mit einem Flansch (76) verbunden ist, der nach radial innen ragende, erste Vorsprünge (86) aufweist, dass die Antriebswelle (58) mit einem Drehkörper (78) verbunden ist, der radial nach außen ragende, zweite Vorsprünge (88) aufweist, und dass der Sensor (80) zwischen den ersten Vorsprüngen (86) und den zweiten Vorsprüngen (88) angeordnet ist.

3. Feldhäcksler (10) nach Anspruch 2, **dadurch gekennzeichnet, dass** der Drehkörper (78) innerhalb eines hohlen Innenraums des Flansches (76) angeordnet ist.

4. Feldhäcksler (10) nach einem der Ansprüche 1 bis 3, **dadurch gekennzeichnet, dass** der Sensor (80) an einem ersten Ende des Auswurfbeschleunigers (28) angebracht ist und dass der Auswurfbeschleuniger (28) an seinem zweiten Ende gegenüber der Antriebswelle (58) in einer Drehlagerung (84) abgestützt ist.

## Claims

1. Forage harvester (10) having an internal combustion engine (32) which is drive-connected via a first drive belt (52) to a cutterhead (26) and to a first end (60) of a drive shaft (58) for driving a discharge accelerator (28) that is arranged downstream of the cutterhead (26) with regard to a harvested-material flow direction, wherein a second end (62) of the drive shaft (58) is or can be brought into drive-connection via a second drive belt (66) with a grain processor (24) for cracking grains contained in the harvested-material flow, said grain processor (24) being arranged or positionable in the harvested-material flow direction between the cutterhead (26) and the discharge accelerator (28), and wherein the discharge accelerator (28) comprises radially extending support discs (72) that are drive-connected to the drive shaft (58), and paddles (70), fastened to the support discs (72), for conveying harvested material, **characterized in that** the support discs (72) are fastened to a hollow shaft (74) enclosing the drive shaft (58), and **in that** a sensor (80) for sensing the force transmitted by the drive shaft (58) to the discharge accelerator (28) is arranged between the drive shaft (58) and the discharge accelerator (28).

2. Forage harvester (10) according to Claim 1, **characterized in that** the discharge accelerator (28) is connected to a flange (76) which has radially inwardly projecting first projections (86), **in that** the drive shaft (58) is connected to a rotary body (78) which has radially outwardly projecting second projections (88), and **in that** the sensor (80) is arranged between the first projections (86) and the second projections (88).

3. Forage harvester (10) according to Claim 2, **characterized in that** the rotary body (78) is arranged within a hollow interior of the flange (76).

4. Forage harvester (10) according to one of Claims 1 to 3, **characterized in that** the sensor (80) is fitted at a first end of the discharge accelerator (28), and **in that** the discharge accelerator (28) is supported in a rotary mounting (84) at its second end towards the drive shaft (58).

## Revendications

1. Ramasseuse-hacheuse (10) comprenant un moteur à combustion interne (32) qui est connecté par entraînement par le biais d'une première courroie d'entraînement (52) à un tambour de hachage (26) et à une première extrémité (60) d'un arbre d'entraînement (58) pour l'entraînement d'une centrifugeuse d'éjection (28) disposée, par rapport à la direction de flux du produit de récolte, en aval du tambour de hachage (26), une deuxième extrémité (62) de l'arbre d'entraînement (58) étant ou pouvant être amenée en liaison d'entraînement par le biais d'une deuxième courroie d'entraînement (66) avec un processeur de grains (24) pour battre les grains contenus dans le flux de produit de récolte, lequel processeur est disposé ou peut être positionné dans la direction du flux de produit de récolte entre le tambour de hachage (26) et la centrifugeuse d'éjection (28) et la centrifugeuse d'éjection (28) comprenant des disques de support (72) connectés par entraînement à l'arbre d'entraînement (58), s'étendant radialement, et des pales (70) pour le transport du produit de récolte, fixées aux disques de support (72), **caractérisée en ce que** les disques de support (72) sont fixés à un arbre creux (74) entourant l'arbre d'entraînement (58) et **en ce qu'**entre l'arbre d'entraînement (58) et la centrifugeuse d'éjection (28) est disposé un capteur (80) pour détecter la force transmise par l'arbre d'entraînement (58) à la centrifugeuse d'éjection (28).

2. Ramasseuse-hacheuse (10) selon la revendication 1, **caractérisée en ce que** la centrifugeuse d'éjection (28) est connectée à une bride (76) qui présente des premières saillies (86) saillant radialement vers l'intérieur, **en ce que** l'arbre d'entraînement (58) est connecté à un corps rotatif (78) qui présente des deuxièmes saillies (88) saillant radialement vers l'extérieur, et **en ce que** le capteur (80) est disposé entre les premières saillies (86) et les deuxièmes saillies (88).

3. Ramasseuse-hacheuse (10) selon la revendication 2, **caractérisée en ce que** le corps rotatif (78) est disposé à l'intérieur d'un espace intérieur creux de la bride (76).

4. Ramasseuse-hacheuse (10) selon l'une quelconque des revendications 1 à 3, **caractérisée en ce que** le capteur (80) est monté à une première extrémité de la centrifugeuse d'éjection (28) et **en ce que** la centrifugeuse d'éjection (28) est supportée au niveau de sa deuxième extrémité par rapport à l'arbre d'entraînement (58) dans un support de palier rotatif (84).
